# EUROPEAN PATENT SPECIFICATION

(11) **EP 1 643 228 B1**
(45) Date of publication and mention of the grant of the patent: **23.05.2012**
(21) Application number: 03079074.5
(22) Date of filing: 14.12.2003
(51) Int. Cl.: G01K 13/00, G01K 1/08

(54) **Electronic clinical thermometer with a detachable probe**
Ein elektronisches klinisches thermometer mit einer abnehmbaren Sonde
Thermomètre clinique électronique du type à sonde détachable

(43) Date of publication of application: 05.04.2006
(73) Proprietor: Actherm Inc., Cambridge CB2 1FD (GB)
(72) Inventor: Chen, Sanlian, Cambridge CB2 1FD (GB)
(74) Representative: Lang, Christian

(56) References cited:
- EP-A- 0 345 788
- US-A- 4 062 104
- US-A- 4 958 936
- US-A- 5 575 563
- US-A1- 2002 163 955
- PATENT ABSTRACTS OF JAPAN vol. 011, no. 164 (P-580), 27 May 1987 (1987-05-27) -& JP 61 296228 A (MATSUSHITA ELECTRIC WORKS LTD), 27 December 1986 (1986-12-27)
- PATENT ABSTRACTS OF JAPAN vol. 011, no. 091 (P-558), 23 March 1987 (1987-03-23) -& JP 61 243334 A (CITIZEN WATCH CO LTD), 29 October 1986 (1986-10-29)
- PATENT ABSTRACTS OF JAPAN vol. 008, no. 048 (P-258), 3 March 1984 (1984-03-03) -& JP 58 200118 A (DAINI SEIKOSHA KK), 21 November 1983 (1983-11-21)

## Description

### BACKGROUND OF THE INVENTION

### (a) Field of the Invention

The present invention relates to a assembly method and structure of an electronic clinical thermometer, and in particular to a clinical thermometer which can be disassembled or assembled as required, wherein one of the detachable modules such as the measuring body has an incomplete electronic clinical thermometer circuit lacking at least two elements, and these electronic elements are mounted within the other module such as the measuring probe, so that the two modules when attached together form a complete clinical thermometer for measuring the temperature of patients.

### (b) Description of the Prior Art

Before the invention of electronic thermometers, mercury thermometers were widely used for measuring body temperature. Mercury will expand when subject to heat and contract when subject to cold. When in measuring, the mercury in the measuring probe will expand so that the mercury will go into a capillary tube made of glass, so enabling a user to read the temperature on the graduation of the tube. In recent years, because of the serious danger of mercury pollution to human health, electronic thermometers have been developed, and have gradually replaced the mercury thermometers.

The working principle of the electronic thermometer comprises the steps of using a counter built in the integrated circuit to count the time required for an external RC oscillation circuit composed of reference resistor and capacitor to oscillate a certain number of oscillation as the reference time, switching a temperature sensor to the above-mentioned RC oscillation circuit to carry out RC oscillation, obtaining the number of oscillation in the reference time, and then converting the number of oscillation into digital signal through the internal operation of the microprocessor, and then transmitting the digital signal to the display to show the measured temperature.

When the RC oscillation circuit composed of the reference resistor and capacitor and the RC oscillation circuit composed of the temperature sensor and the same capacitor has the same oscillation frequency as the oscillator built in the integrated circuit under a specific condition, the preset temperature value (the general preset temperature is 37°C or 98.6°F) in the integrated circuit is obtained. With the temperature value obtained at the time when the oscillation frequencies are the same as the basis, the other temperature values represented by the difference between the two oscillation frequencies can be calculated. As the two oscillation circuits are using the same capacitor in rotation, if it is desired to keep the temperature difference after operation within a certain range (the environmental temperature is generally preset as follows: 25°C for the reference resistor, and 37°C for the temperature sensor), the resistance difference between the reference resistor and the temperature sensor should also be kept at the same range. The reference resistor and the temperature sensor of the conventional electronic thermometer are fixedly mounted on the measuring circuit board, so that the resistance matching result of the reference resistor and the temperature sensor cannot be replaced.

Electronic thermometers are not easily broken and hazardous to health, and can measure accurately. Furthermore, the time required for measuring is very short. So, the conventional mercury thermometer is gradually being replaced with electronic thermometers. With the progress in scientific technology and the improvement in living standards, the electronic thermometer is relied upon by many users, and has become a common first aid item in hospitals and households.

Because of the variety of viruses and bacteria present, people are seeking more sanitary conditions at home and in hospitals, together with more accurate readings of body temperature when using thermometers. A thermometer which is used solely by one person is ideally required, in order to prevent infections being passed on from one user to another of the thermometer. The electronic thermometers currently on the market are expensive, and so cannot be disposed of after use, and must be cleaned by means of a long, complicated sterilizing procedure before being able to be safely used again.
Therefore, it is an object of the present invention to provide an assembly method and structure of an electronic clinical thermometer which divides the conventional temperature measuring circuit into two detachable sub-circuits. From the working principle of the electronic thermometer mentioned above, it is understood that if only the temperature sensor is isolated as an independent member, the resistance of the temperature sensor and the resistance of the reference resistor on the circuit board cannot keep within a predetermined range. That is to say, the independent member containing the temperature sensor is non-replaceable. In order to achieve the purpose of the present invention, this independent member must include at least two electronic components, i.e. the reference resistor and the temperature sensor.

Furthermore, when the temperature measured by the conventional electronic clinical thermometer is stabilized, the thermometer will produce an illuminated signal or will activate a buzzer for notifying the user of the peak temperature. Moreover, the display of most of the conventional thermometers does not have a backlight generator. Some conventional thermometers have a backlight generator, but the backlight generator can only give light for a very short period of time, so that when the user takes up the thermometer to read the temperature value, the backlight will be off thereby making it difficult to read the temperature and therefore causing much inconvenience in use.

Although the conventional electronic clinical thermometer is provided with a buzzer for making a humming sound to notify the user when a stabilized temperature value is obtained, the buzzer is structured with a sound case thus increasing the size of the thermometer.

Patent abstracts of Japan vol. 011, no. 164 (P-580), 27 May 1987 (1987-05-27) - & JP 61296228 A (Matsushita electric works Ltd), 27 December 1986 (1986-12-27), discloses a thermometer which consists of a temperature sensitive part and a display main body part, wherein the temperature sensitive part is equipped with a temperature sensitive element. The temperature sensitive part and the display main body part are made freely separable. When in use, only the temperature sensitive part is held under the arm of a person at the time of thermometry and then the terminal part of the temperature sensitive part is inserted into the port of the display main body part to show the temperature measurement It is obvious that the Japanese reference is irrelevant to an electronic clinical thermometer of which the temperature sensing device is to be disposed after use. In brief, according to the present invention, the separation of the temperature sensing device from the measuring body is designed for disposing the temperature sensing device after use, whereas according to the Japanese reference, the separation of the temperature sensitive part from the display main body part is designed for cost reduction and shorten the time required in thermometry.

Patent abstracts of Japan vol. 011, no. 091 (P-558), 23 March 1987 (1987-03-23) - & JP 61 243334 A (Citizen Watch Co Ltd), 29 October 1986 (1986-10-29) discloses a separate type electronic thermometer which is designed for eliminating effect of external noise regardless of a larger length of a cable for connecting a probe section and a body section by incorporating a thermistor, a capacitor and inverters forming a temperature oscillation circuit into the probe section. This Japanese reference fails to teach or describe an electronic clinical thermometer of which the temperature sensing device is to be disposed after use.

Therefore, it is an object of the present invention to provide an assembly method and structure of an electronic clinical thermometer which can obviate and mitigate the above-mentioned drawbacks.

### SUMMARY OF THE INVENTION

According to the present invention, an electronic clinical thermometer has been provided comprising the features set out in independent claim 1. Preferred embodiments of the invention have been defined by the dependent claims.

It is the primary object of the present invention to provide an assembly method of an electronic clinical thermometer which can be disassembled or assembled as required, wherein one of the detachable modules such as the measuring body has an incomplete electronic clinical thermometer circuit lacking at least two elements, and these electronic elements are mounted within the other module such as the measuring probe, so that the two modules when attached together form a complete clinical thermometer for measuring the temperature of a patient.

It is another object of the present invention to provide a structure of an electronic clinical thermometer which includes a measuring body with an incomplete electronic clinical thermometer circuit controlled by an integrated circuit and which requires at least two fewer elements (such as reference resistor and temperature sensor), and a temperature sensing device containing at least two fewer elements in the measuring body, and a connecting structure arranged between the measuring body and the temperature sensor and being conductive, so that the measuring body and the temperature sensor can be disengaged from each other or engaged together to form a complete electronic clinical thermometer.

It is still another object of the present invention to provide an electronic clinical thermometer which enables a user to read the temperature easily, and which has a backlight device to make it easier to read the temperature and a delayed circuit and a reset circuit so that when the measured temperature is stabilized, a buzzer will produce a humming sound and/or a light source will give light to notify the user of the peak temperature, and the backlight device will be activated within a predetermined period of time after the stabilized temperature is obtained thereby making it easier to read the measured temperature. If the user cannot read the temperature clearly within the time period when the backlight device is turned on, the user may press and hold the switch to activate the backlight device to give light until the switch is released and turned off.

It is a further object of the present invention to provide an electronic clinical thermometer which has a sheet-like buzzer mounted on an opening of the circuit board of the measuring body thereby eliminating the sound case of the conventional buzzer and therefore reducing the size of the thermometer.

### BRIEF DESCRIPTION OF THE DRAWINGS

FIG. 1 is a perspective view of an electronic clinical thermometer according to the present invention.
FIG. 2 is a perspective exploded view of an electronic clinical thermometer according to the present invention.
FIG. 3 is a perspective exploded view of the temperature sensor of an electronic clinical thermometer according to the present invention.
FIG. 4 is a perspective exploded view showing the separation of the measuring body with the temperature sensor of an electronic clinical thermometer according to the present invention.
FIG. 5 is a sectional view of an electronic clinical thermometer according to the present invention.
FIG. 6 is a circuit diagram of the incomplete electronic temperature measuring circuit of an electronic clinical thermometer according to the present invention.
FIGS. 7 to 9 are schematic views showing the connector of preferred embodiment according to the present invention.
FIG. 10 is a schematic view showing the temperature sensing device of the present invention.
FIG. 11 is a schematic view of the measuring probe according to the present invention.
FIG. 12 is a schematic view of the measuring probe of another preferred embodiment according to the present invention.
FIG. 13 is a perspective view of an electronic clinical thermometer according to the present invention.

### DETAILED DESCRIPTION OF THE PRESENT INVENTION

The following descriptions are of exemplary embodiments only, and are not intended to limit the scope, applicability or configuration of the invention in any way. Rather, the following description provides a convenient illustration for implementing exemplary embodiments of the invention. Various changes to the described embodiments may be made in the function and arrangement of the elements described without departing from the scope of the invention as set forth in the appended claims.

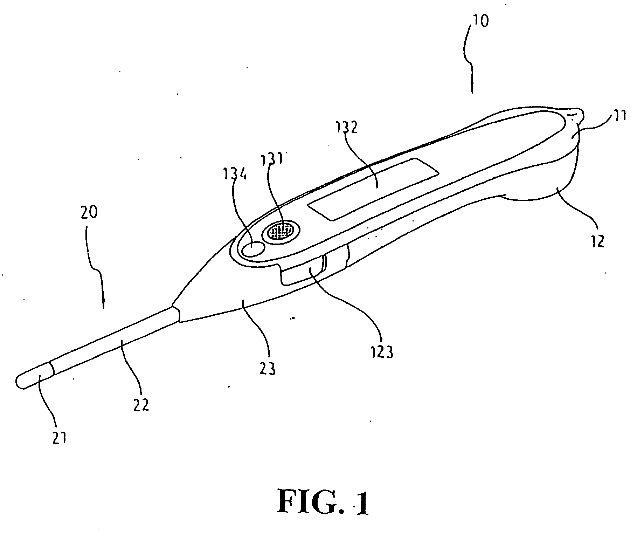

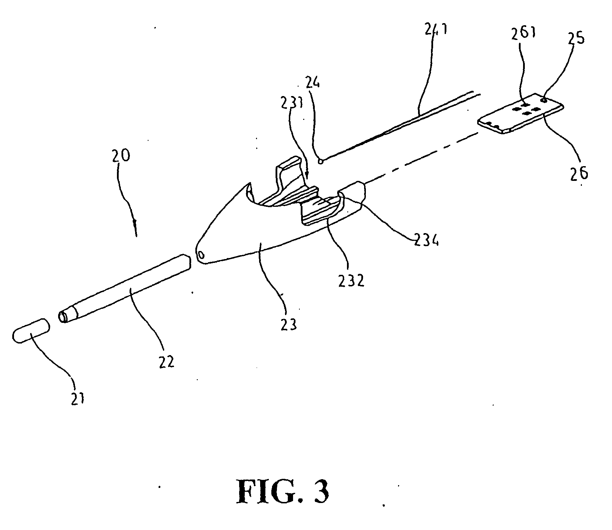

Referring to FIGS. 1,2, and 3, the electronic clinical thermometer according to the present invention comprises two detachable modules, i.e. the measuring body 10 and the sensing device 20.

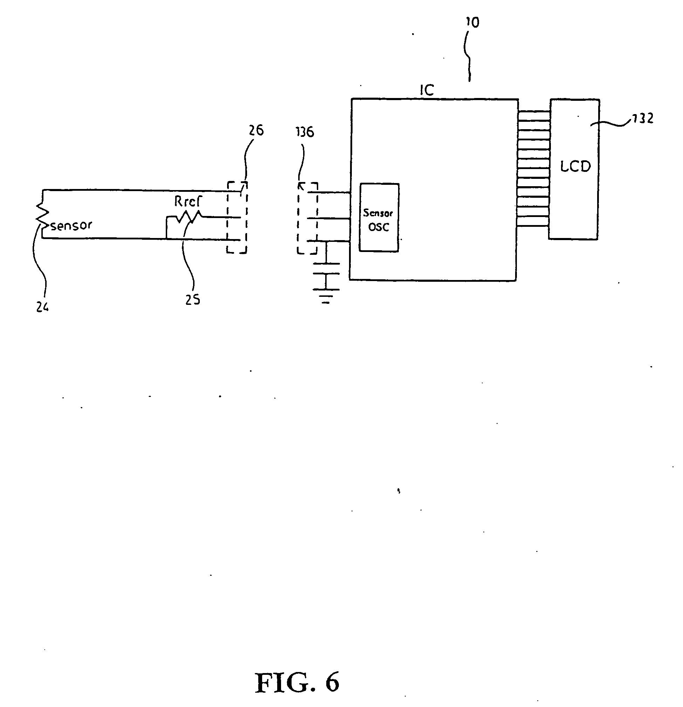

The measuring body 10 comprises a top cover 11 and a bottom cover 12 made from hard plastic material. The front section of the bottom cover 12 is formed with a slot 121 on the top and a recess 122 on the bottom. Two lateral sides of the front section of the bottom cover 12 are each formed with an engaging block 123. The bottom cover 12 is provided with a battery cover 124 for holding batteries. The measuring body 10 contains a flexible or rigid circuit board 13 and a core 14 mounted with each other for the connection with a power switch 131, a display 132 (such as an LCD), a buzzer 133, and a light generator 134 (such as an LED). The switch 131 and the light generator 134 slightly protrude out of the surface of the measuring body 10. The buzzer 133 is mounted in an opening 1331 of the circuit board 13. The buzzer 133 is shaped as a sheet member and is not a conventional box-like member, thereby effectively reducing its volume. When the power is turned on, the measured temperature is stabilized, or the power is turned off, the buzzer 133 will make a humming sound and the light generator 132 will give light to notify the user. The rear of the display 132 is provided with a backlight plate 15, and the IC board 13 is provided with an incomplete electronic temperature measuring circuit (see FIG. 6) which comprises a controlling integrated circuit and externally connected electronic components, lacking at least two elements, i.e. the reference resistor and temperature sensor for use in oscillation. When the power switch 131 is turned on, due to the fact that the electronic clinical thermometer is incomplete, it is impossible to carry out temperature measurement, and the display 132 will show error such as Err. Only when incomplete circuit of the measuring body 10 is connected to the reference resistor and the temperature sensor of the sensing device 20 via a connection structure to form a complete circuit will the electronic clinical thermometer be able to measure the temperature of a patient. The measuring body 10 includes largely the measuring circuit for processing the temperature signal obtained by the sensing device 20 and converts the signal into data which is then shown in the display 132.

The temperature sensing device 20 is an independent member externally formed from a hard plastic material and comprises a measuring probe 21, a temperature-sensing section 22, a connection seat 23 and at least two electronic elements containing a temperature sensor 24 and a reference resistor 25. The temperature sensor 24 and the reference resistance 25 may be a resistance matching module, wherein the resistance difference of the reference resistance 25 and the sensor 24 at a specific temperature (the general environmental temperature is set as follows: 25°C for the reference resistor 25 and 37°C for the temperature sensor 24) must be within a specific range. The connection seat 23 is a hollow member provided at the top with a notch 231 and at the two lateral sides with an engaging slot 232 which is configured to engage with the engaging block 123 of the bottom cover 12. The inner side of the top front portion of the connection seat 23 has a protuberance 233 adapted to engage with the slot 121 of the bottom cover 12. The temperature sensor 24 is fitted in the measuring probe 21 and the end of the conductive wire 241 of the temperature sensor 24 and other electronic elements are fixedly connected to a connector (see FIG. 6). When the sensing device 20 and the measuring body 10 are connected via a connector (as shown in FIG. 6), the incomplete measuring circuit of the measuring body 10 is connected via a metal plate to the temperature sensor 24 and the reference resistor 25 of the sensing device 20 to form into an effective complete temperature measuring circuit. At this instance, the power switch 131 is turned on automatically or manually and the thermometer is ready to proceed to measuring temperature.

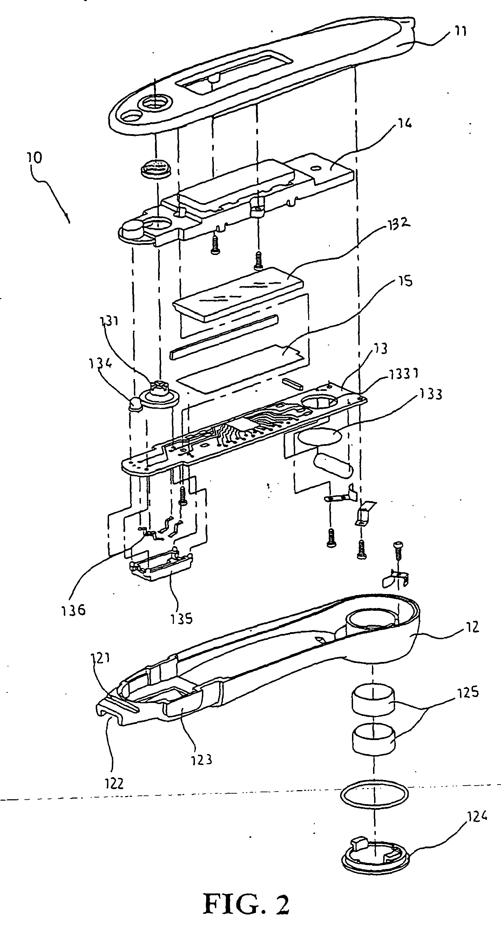

The connection structure is positioned between the measuring body 10 and the sensing device 20. As shown in FIG. 2, the circuit board 13 is provided with a cap 135 for keeping a plurality of resilient conductive members 136 on the circuit board 13. The resilient conductive members 13 protrude partially out the cap 135. The connection seat 23 is formed with a sliding slot 234 for the mounting of a control board 26 having one side being connected to the conductive wire 242 of the temperature sensor 24. The surface of the control board 26 is provided with metal contacts 261 for the mounting of the reference resistor 25.

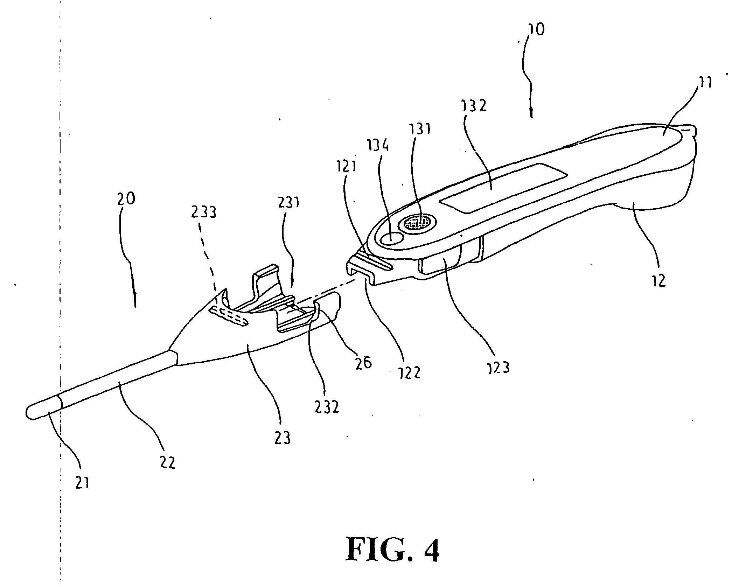

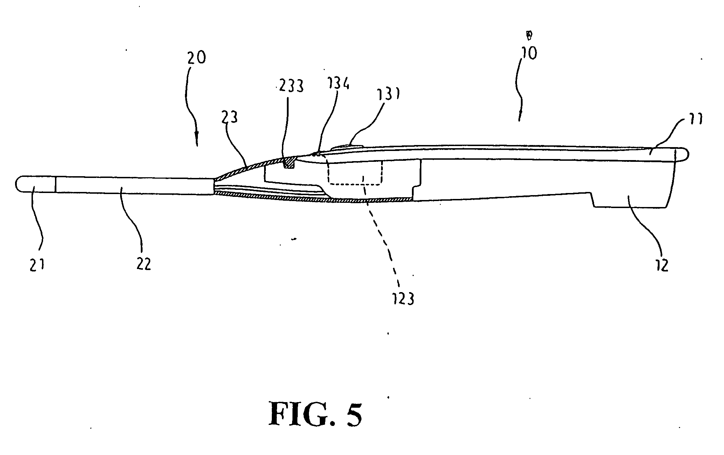

Referring to FIGS. 4 and 5, when the sensing device 20 is connected with the measuring body 10, the engaging slot 232 of the connection seat 23 will engage with the engaging block 123 of the measuring body 10 thereby forming a complete electronic clinical thermometer. At this instance, the protuberance 233 of the connection seat 23 is engaged with the slot 121 of the measuring body 10 so that the sensing device 20 will not be dislocated after the connection with the measuring body 10.

Referring to FIGS. 4, 5 and 6, when the measuring body 10 is connected with the sensing device 20, the metal contacts 261 of the control board 26 will get into touch with the resilient conductive members 136 so that the incomplete electronic clinical thermometer circuit of the measuring body 10 will be connected with the reference resistor 25 and the temperature sensor 26 of the sensing device 20 to form an effective complete temperature measuring circuit with measuring error within a specific range. At this instance, when the measuring body 10 is connected with the sensing device 20, the thermometer will be triggered automatically or manually by turning on the power switch 131 to activate the electronic temperature measuring circuit to generate measuring signals until a steady temperature is obtained.

Hence, the independent measuring body 10 can be used with a plurality of temperature sensing devices 20 because the temperature sensing devices 20 are disposable and re-usable. It can be used by multiple users at home or in hospitals. The temperature sensing device 20 is a module which is easy to manufacture, low in cost, and easily sterilized, thus preventing infection.

The display 132 of the measuring body 10 is provided with a backlight plate 15 and the control circuit is provided with a delay circuit and a reset circuit, so that when the measured temperature is stabilized, the buzzer 133 will make a humming sound and the light generator 134 will give light to notify the user that a steady temperature is obtained. Within a preset time period after the steady temperature signal is obtained, the backlight plate 15 will be activated to give light for about 5 to 10 seconds. If the user cannot read the temperature clearly within that period of time, he or she may depress and hold the power switch 131 so that backlight plate 15 will give light until the power switch 131 is released and turned off

The measured result of the sensing device 20 can be wirelessly transmitted to the central control system of the measuring body 10 by way of wireless. A wireless transmitter may be arranged in the sensing device 20 and a wireless transmission circuit is mounted in the incomplete electronic measuring circuit so as to transmit the measured result to the central control system.

In the fabrication of the electronic clinical thermometer, the resistance matching module is regarded as a unit. The resistance matching module with the reference resistor 25 and the temperature sensor 24 having a resistance difference with a specific range at a specific temperature is welded via the connection structure onto the incomplete electronic temperature measuring circuit board, such that the incomplete electronic temperature measuring circuit board is formed into an effective complete electronic temperature measuring circuit and can be mounted within the housing of the thermometer casing without adjusting the difference value thereby forming an Impact Medical Thermometer.

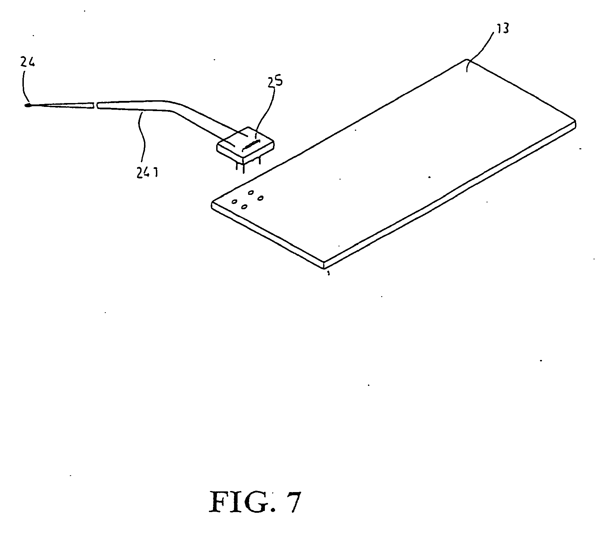

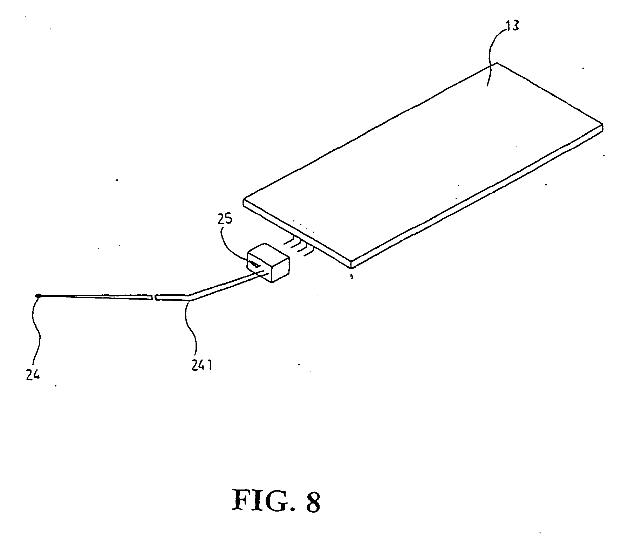

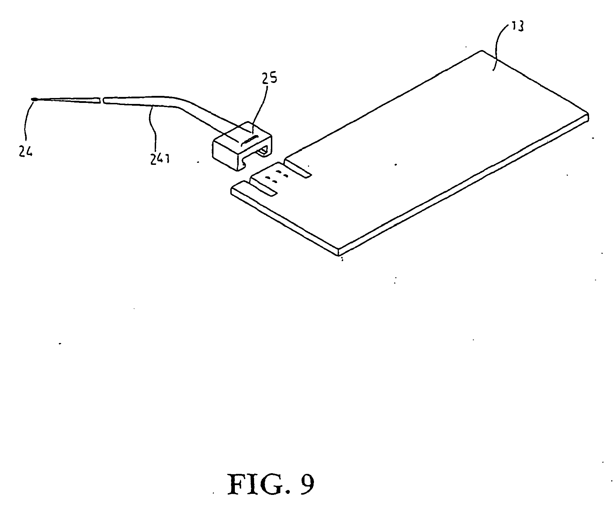

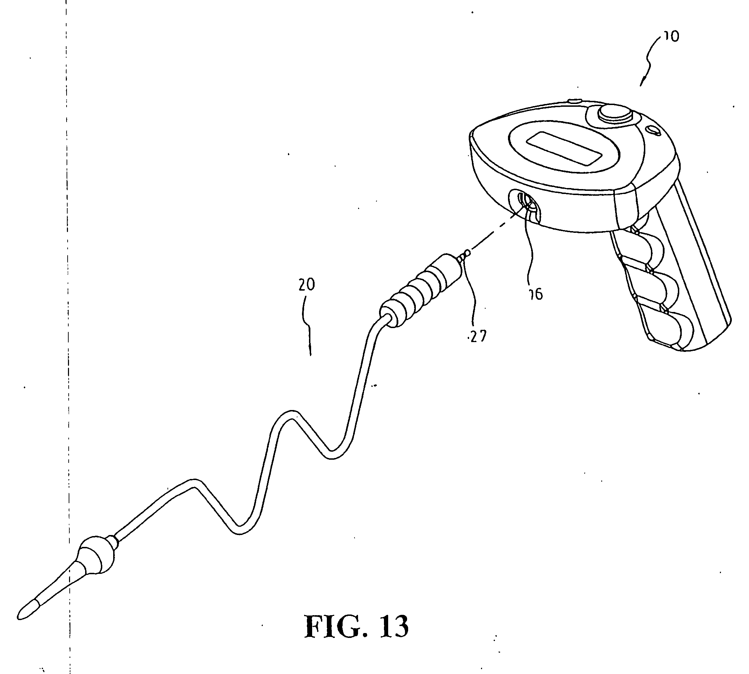

Referring to FIGS. 7, 8, 9, the connection structure is a conductive member between the measuring body 10 and the sensing device 20. The connection structure may be a pin header to socket (see FIG. 7), an edge card to socket (see FIG. 8), a metal string to Simm card (see FIG. 9), or any other connection structure which can achieve the same conductive result. As shown in FIG. 13, the connection structure is a socket 16 and a pin 27 which can be used for current conduction and signal transmission.

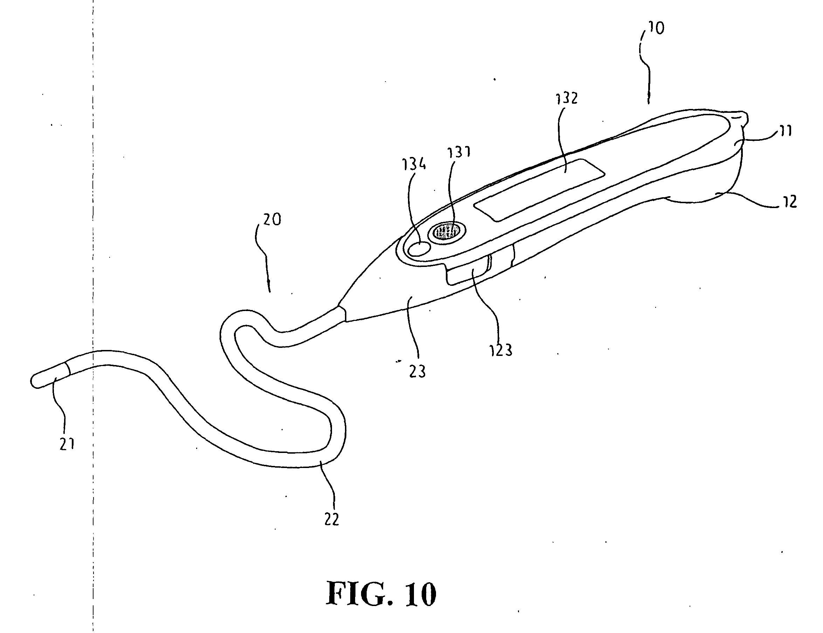

Referring to FIG. 10, the temperature sensing section 22 can be cleaned with hard or soft fabric material and if it is necessary to increase the length, a plastic covered wire can be used.

Referring to FIG. 10, the temperature sensing section 22 connected to the measuring probe 21 of the sensing device 20 may be made of rigid or soft material. When it is necessary to extend the length of the sensing section 22 for facilitating cleaning, sterilizing and using, the sensing section 22 may be made of a cord with plastic covering.

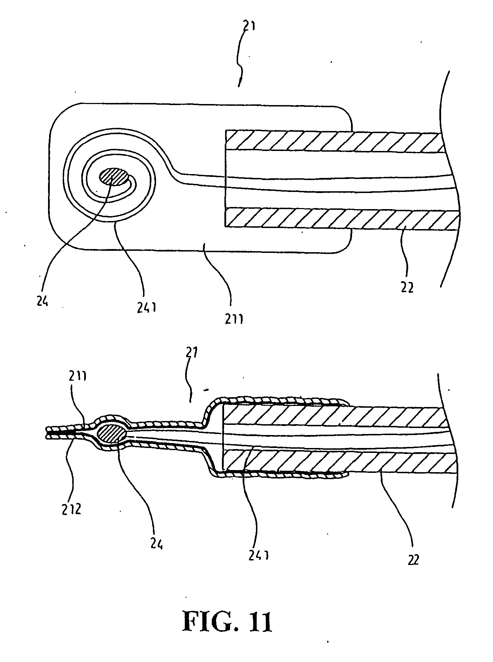

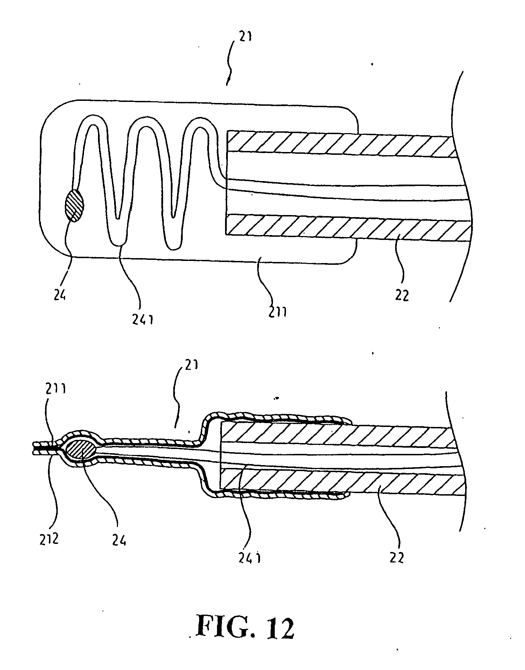

As shown in FIGS. 11, 12, the measuring probe 21 can be made of stacked metal films (such as aluminum foil) 211, 212 with good conductivity. At this instance, the temperature sensor 24 and a part of the conductive wire 241 are positioned between the metal firms 211, 212 and the conductive wire 241 can be concentrically coiled or arranged into a wave shape.

## Claims

1. An electronic clinical thermometer comprising:
a measuring body (10) including a power switch (131), a display (132) and a circuit board (13);
a temperature sensing device (20) connected with the measuring body (10) through a connection structure;
the temperature sensing device (20) including a measuring probe (21), a temperature sensing section (22), a connection seat (23), a reference resistor (25) and a temperature sensor (24) to form a resistance matching module having a resistance difference with a specific range at a specific temperature (24,25); and
a connection structure being mounted between said measuring body (10) and said temperature-sensing device (20)
**characterized in that** the connection structure comprises a cap (135) for keeping a plurality of resilient conductive members (136) to contact said circuit board (13) of said measuring body (10) with the temperature sensing device (20); wherein
the resilient conductive members (136) protrude partially out of said cap (135);
the connection seat (23) has a sliding slot (234) formed thereon for mounting a control board (26) to conductive wires (241) of said temperature sensor (24); and
said control board (26) is provided with metal contacts (261) for mounting said reference resistor (25); whereby when said measuring body (10) is connected with said temperature sensing device (20) the metal contacts (261) of the control board (26) will get into touch with the resilient conduction members (136) so that the circuit board (13) of the measuring body will be connected with the reference resistor (25) and the temperature sensor (26) of the temperature sensing device (20) to form an effective and complete temperature measuring circuit.

2. The electronic clinical thermometer of claim 1, wherein said measuring body (10) comprises a top cover (11) and a bottom cover (12) made from hard plastic material, a front section of said bottom cover (12) being formed with a slot (121) on a top and a recess (122) on a bottom, and two lateral sides of said front section of said bottom cover (12) being each formed with an engaging block (123).

3. The electronic clinical thermometer of claim 1, wherein the measuring body (10) is provided with a battery cover (124) and said power switch (131), said display (132), a buzzer (133), and a light generator (134) are mounted said circuit board (13).

4. The electronic clinical thermometer of claim 1, wherein said connection seat (23) is a hollow member provided at a top with a notch (231) and at two lateral sides with an engaging slot (232) which is configured to engage with an engaging block (123) of a bottom cover (12), an inner side of a top front portion of said connection seat (23) having a protuberance (233) adapted to engage with a slot (121) of said bottom cover (12).

5. The electronic clinical thermometer of claim 1, wherein said measuring probe (21) is made of stacked metal films (211,212) with good conductivity, said temperature sensor (24) and a part of said conductive wire (241) being positioned between said stacked metal films (211,212), and said conductive wire (241) is concentrically coiled or arranged into a wave shape.

## Patentansprüche

1. Elektronisches klinisches Thermometer, das umfasst:
einen Messkörper (10), der einen Netzschalter (131), ein Display (132) und eine Schaltplatte (13) umfasst,
eine Temperaturmessvorrichtung (20), die durch eine Verbindungsstruktur mit dem Messkörper (10) verbunden ist,
wobei die Temperaturmessvorrichtung (20) eine Messsonde (21), einen Temperaturmessbereich (22), einen Verbindungssitz (23), einen Reterenzwiderstand (25) und einen Temperatursensor (24) umfasst, um ein Widerstandvergleichsmodul auszubilden, das eine Widerstandsdifferenz mit einem spezifischen Wertebereich bei einer spezifischen Temperatur (24, 25) aufweist, und
eine Verbindungsstruktur, die zwischen dem Messkörper (10) und der Temperaturmessvorrichtung (20) angeordnet ist,
**dadurch gekennzeichnet, dass** die Verbindungsstruktur eine Kappe (135) umfasst, um eine Vielzahl von elastischen leitenden Elementen (136) zu halten, um die Schaltplatte (13) des Messkörpers (10) mit der Temperaturmessvorrichtung (20) in Kontakt zu bringen, wobei die elastischen leitenden Elemente (136) teilweise aus der Kappe (135) hervorstehen,
wobei der Verbindungssitz (23) einen darin ausgebildeten Gleitschlitz (234) umfasst, um eine Kontrollplatte (26) an leitenden Kabeln (241) des Temperatursensors (24) anzubringen, und
wobei das Bedienungspult (26) mit Metallkontakten (261) versehen ist, um den Referenzwiderstand (25) anzubringen, wobei, wenn der Messkörper (10) mit der Temperaturmessvorrichtung (20) verbunden ist, die Metallkontakte (261) der Kontrollplatte (26) so in Berührung mit den elastischen leitenden Elementen (136) kommen, dass die Schaltplatte (13) des Messkörpers mit dem Referenzwiderstand (25) und dem Temperatursensor (46) der Temperaturmessvorrichtung (20) verbunden wird, um einen effektiven und vollständigen Temperaturenmessschaltkreis auszubilden.

2. Elektronisches klinisches Thermometer nach Anspruch 1, bei welchem der Messkörper (10) eine obere Abdeckung (11) und eine untere Abdeckung (12) umfasst, die aus Hartplastikmaterial hergestellt sind, wobei ein vorderer Bereich der unteren Abdeckung (12) mit einem Schlitz (121) an einer Oberseite und einer Ausnehmung (123) an einer Unterseite ausgebildet ist und wobei zwei laterale Seiten des vorderen Bereichs der unteren Abdeckung (12) jeweils mit einem Eingriffsblock (123) ausgebildet sind.

3. Elektronisches klinisches Thermometer nach Anspruch 1, bei welchem der Messkörper (10) mit einer Batterieabdeckung (124) versehen ist und der Netzschalter (131), das Display (132), ein Signaltongeber (131) und ein Lichtgenerator (134) auf der Schaltplatte (13) angeordnet sind.

4. Elektronisches klinisches Thermometer nach Anspruch 1, bei welchem der Verbindungssitz (23) ein hohles Element ist, das an einer Oberseite mit einer Nut (231) und an zwei lateralen Seiten mit einem Eingriffsschlitz (232) versehen ist, der dazu hergerichtet ist, mit einem Eingriffsblock (123) einer unteren Abdeckung (12) in Eingriff zu stehen, wobei eine Innenseite eines oberen vorderen Bereichs des Verbindungssitzes (23) einen Vorsprung (233) umfasst, der angepasst ist, mit einem Schlitz (121) der unteren Abdeckung (12) in Eingriff zu stehen.

5. Elektronisches klinisches Thermometer nach Anspruch 1, bei welchem die Messsonde (21) aus gestapelten Metallfolien (211,212) mit guter Leitfähigkeit hergestellt ist, wobei der Temperatursensor (24) und ein Teil des leitenden Kabels (241) zwischen den gestapelten Metallfolien (211, 212) angeordnet ist und wobei das leitende Kabel (241) konzentrisch gewickelt ist oder in Wellenform angeordnet ist.

## Revendications

1. Thermomètre clinique électronique comprenant:
un corps de mesure (10) comprenant un commutateur de puissance (131), un affichage (132) et une plaquette de circuit (13) ;
un dispositif de détection de température (20) relié au corps de mesure (10) par une structure de connexion ;
le dispositif de détection de température (20) comprenant une sonde de mesure (21), une section de détection de température (22), un siège de connexion (23), une résistance de référence (25) et un palpeur de température (24) pour former un module d'adaptation de résistance ayant une différence de résistance avec un domaine spécifique à une température spécifique (24, 25) et
une structure de connexion étant montée entre ledit corps de mesure (10) et ledit dispositif de détection de température (20),
**caractérisé en ce que** la structure de connexion comprend un capuchon (135) pour retenir une pluralité d'organes conducteurs élastiques (136) pour contacter ladite plaque de circuit (13) dudit corps de mesure (10) avec le dispositif de détection de température (20),
les organes conducteurs élastiques (136) faisant partiellement saillie dudit capuchon (135),
le siège de connexion (23) ayant une fente coulissante (234) formée dessus pour monter une plaquette de commande (26) sur les fils conducteurs (241) dudit palpeur de température (24) et
ladite plaquette de commande (26) étant pourvue de contacts métalliques (261) pour monter ladite résistance de référence (25), cependant que, lorsque ledit corps de mesure (10) est relié audit dispositif de détection de température (20), les contacts métalliques (261) de la plaquette de commande (26) seront en contact avec les organes conducteurs élastiques (136) si bien que la plaquette de circuit (13) du corps de mesure sera reliée à la résistance de référence (25) et au palpeur de température (26) du dispositif de détection de température (20) pour former un circuit de mesure complet et effectif.

2. Thermomètre clinique électronique selon la revendication 1 dans lequel ledit corps de mesure (10) comprend un recouvrement de dessus (11) et un recouvrement de fond (12) faits en un matériau plastique dur, une section frontale dudit recouvrement de fond (12) étant formée avec une fente (121) sur un dessus et un évidement (122) sur un fond et deux côtés latéraux de ladite section frontale dudit recouvrement de fond (12) étant formés chacun avec un bloc d'enclenchement (123).

3. Thermomètre clinique électronique selon la revendication 1 dans lequel le corps de mesure (10) est pourvu d'un recouvrement de pile (124) et ledit commutateur de puissance (131), ledit affichage (132), un vibreur (133) et un générateur de lumière (134) sont montés sur ladite plaquette de circuit (13).

4. Thermomètre clinique électronique selon la revendication 1 dans lequel ledit siège de connexion (23) est un organe creux pourvu sur un dessus d'une encoche (231) et sur deux côtés latéraux d'une fente d'enclenchement (232) qui est configurée pour s'enclencher avec un bloc d'enclenchement (123) d'un recouvrement de fond (12), un côté intérieur d'une portion frontale de dessus dudit siège de connexion (23) ayant une protubérance (233) adaptée pour s'enclencher avec une fente (121) dudit recouvrement de fond (12).

5. Thermomètre clinique électronique selon la revendication 1 dans lequel ladite sonde de mesure (21) est faite en feuilles de métal empilées (211, 212) avec une bonne conductivité, ledit palpeur de température (24) et une partie dudit fil conducteur (241) étant positionnés entre lesdites feuilles de métal empilées (211, 212) et ledit fil conducteur (241) étant bobiné de manière concentrique ou arrangé en forme d'onde.
